# EUROPEAN PATENT SPECIFICATION

(11) **EP 4 118 881 B1**
(45) Date of publication and mention of the grant of the patent: **18.06.2025**
(21) Application number: 21709992.8
(22) Date of filing: 09.03.2021
(51) Int. Cl.: H04W 48/06, H04W 4/70, H04W 4/80, H04W 28/02, H04W 84/18

(54) **METHOD OF CONTROLLING A NODE FOR JOINING A WIRELESS NETWORK**
VERFAHREN ZUR STEUERUNG EINES KNOTENS FÜR DEN BEITRITT ZU EINEM DRAHTLOSEN NETZWERK
PROCÉDÉ DE COMMANDE D'UN NOEUD POUR SE RACCORDER AU RÉSEAU SANS FIL

(30) Priority: 09.03.2020 WO PCT/CN2020/078464; 10.04.2020 EP 20169169
(43) Date of publication of application: 18.01.2023
(73) Proprietor: Signify Holding B.V., 5656 AE Eindhoven (NL)
(72) Inventor: DONG, Peiliang, 5656 AE Eindhoven (NL); HAJAMYDEEN, Mansoor, Ali, 5656 AE Eindhoven (NL); ZHOU, Xuwen, 5656 AE Eindhoven (NL); WU, Junxi, 5656 AE Eindhoven (NL); YAO, Jun, 5656 AE Eindhoven (NL)
(74) Representative: Verweij, Petronella Daniëlle
(86) International application number: PCT/EP2021/055852
(87) International publication number: WO 2021/180683

(56) References cited:
- US-A1- 2006 268 746
- US-A1- 2012 224 568
- US-A1- 2017 257 814
- KALITA ALAKESH ET AL: "Faster Joining in 6TiSCH Network using Dynamic Beacon Interval", 2019 11TH INTERNATIONAL CONFERENCE ON COMMUNICATION SYSTEMS & NETWORKS (COMSNETS), IEEE, 7 January 2019 (2019-01-07), pages 454 - 457, XP033548982, DOI: 10.1109/COMSNETS.2019.8711460
- MAHIR MEGHJI ET AL: "Performance evaluation of 802.15.4 Medium Access Control during network association and synchronization for sensor networks", UBIQUITOUS AND FUTURE NETWORKS (ICUFN), 2012 FOURTH INTERNATIONAL CONFERENCE ON, IEEE, 4 July 2012 (2012-07-04), pages 27 - 33, XP032220021, ISBN: 978-1-4673-1377-3, DOI: 10.1109/ICUFN.2012.6261659
- JAVED MUHAMMAD ET AL: "Fast association process (FAP) of beacon enabled for IEEE 802.15.4 in strong mobility", 2013 8TH INTERNATIONAL CONFERENCE ON INFORMATION TECHNOLOGY IN ASIA (CITA), IEEE, 1 July 2013 (2013-07-01), pages 1 - 8, XP032510659, DOI: 10.1109/CITA.2013.6637555

## Description

### FIELD OF THE INVENTION

This invention relates to the field of wireless networks, and particularly to the field of wireless network joining.

### BACKGROUND OF THE INVENTION

Wireless-connected internet of things (IoT) products, such as connected luminaires or sensors, need to join a wireless network at the time they are installed or deployed at the end-users' sites. After joining the wireless network, these products form an IoT network, and therefore can remotely be controlled by, or report data to, an IoT system and the end users. This network-forming procedure is usually called network joining or network commissioning.

The networks to be formed may have a variety of sizes, for example ranging from several nodes in home-automation networks, to hundreds or even thousands of nodes in professional lighting systems. During the commissioning procedure of a large-scale wireless network, there are a large number of nodes attempting to contact the coordinator to join the network at the same time. There is no way for the joining nodes to directly communicate with each other, and therefore no way for joining nodes to coordinate this commisioning procedure. This means that during the commisioning procedure of a large-scale wireless network, the channel of the wireless newtork is likely to be busy when an individual node attempts to join it, resulting in failed joining attempts.

A known approach to avoid congestion is to differentiate the joining time of the joining nodes. One way of achieving this differentiation is to set a random waiting time for the joining nodes, therefore differentiating the time at which nodes attempt to join the wireless network. However, defining the maximum waiting time proves to be problematic. To successfully form a large-scale network with hundreds of nodes, the maximum waiting time has to be typically tens of seconds, or even more. However, to successfully form a small network with several or just over ten nodes, a maximum waiting time of tens of seconds is excessive. The users may experience a halted-alike scenario where the several nodes would do nothing for one minute or so, and start to join after that.

US2012224568A1 discloses A method and apparatus are described for synchronizing a network. A plurality of existing nodes in the network may transmit beacons in accordance with a round-robin scheduling sequence. A new joining node may receive a beacon from a specific one of the existing nodes during a beacon interval, and transmit a join beacon frame during the beacon interval after waiting a random period of time. The specific existing node may receive the join beacon frame and transmit a notification to the other existing nodes in the network indicating that a new node is joining the network.

"Faster Joining in 6TiSCH Network using Dynamic Beacon Interval" (Kalita Alakesh et al., 2019-01-07) discloses a dynamic beacon interval scheme in which the interval varies with the number of j oined nodes during network formation.

"Performance evaluation of 802.15.4 Medium Access control during network association and synchronization for sensor networks" (2012-07-04) provides a performance evaluation of the 802.15.4 MAC during device association and synchronization with the PAN coordinator.

To address this problem it is known to make the maximum waiting time configurable. However, it is impractical and/or difficult for manufacturers and traders to predict the network sizes at the customer sites, meaning that pre-configuration is problematic.

### SUMMARY OF THE INVENTION

The invention is defined by the claims.

According to examples in accordance with an aspect of the invention, there is provided a method of controlling a node for joining a wireless network, comprising:
controlling the node to wait for a predetermined length of time;
receiving beacon messages communicated by nodes of the wireless network during the predetermined length of time;
analysing the number of received beacon messages with respect to a congestion condition, and
determining whether to control the node to join the wireless network based on the result of the analysis.

The proposed invention relates particularly to a method of managing the timing of j oining nodes to a wireless network, based on beacons transmitted by nodes of the wireless network. Such a method may reduce the risk of a large number of nodes attempting to join the network at the same time.

Nodes attempting to join a network have no direct way of communicating with each other, which proves problematic for coordination of many nodes attempting to join a network at the same time. It is proposed that a solution to this problem can be provided by utilizing beacon messages.

The inventor has realized that, while direct communication between nodes not yet connected to the wireless network is not possible, by controlling to node to listen to beacon messages transmitted by the wireless network it may be possible for the node to determine the number of other nodes attempting to join the wireless network. By doing so, it may be possible to determine the liklihood of congestion, and to configure their maximum waiting time accordingly.

As a result, a concept of the proposed invention may be to control joining nodes to listen to beacon messages transmitted by nodes of the wireless network, and subsequently derive how busy the network is. This may be employed to reduce the chance that multiple nodes attempt to join the network at the same time, as nodes may be controlled to wait in the case that the network appears busy.

Beacon messages are sent by nodes on a wireless network when they receive beacon request messages. By monitoring the channel for a predetermined length of time and detecting these messages, nodes that want to join the network may obtain an indication about the likelihood of congestion. This can inform the decision about whether to join the network or not.

The predetermined length of time may be determined, for example, based on a random time value between zero and a maximum waiting time value.

In order to reduce the chance of channel congestion it is proposed to differentiate the amount of time each node has to wait before joining. This differentiation may be achieved by making the predetermined length of time a random length of time. By differentiating, it means that the total number of beacon messages varies for each node and a variety of judgements are made about whether to join.

As it is possible that a node may wait for a time close to 0, this also helps to avoid a "halted alike" scenario where several nodes do nothing for a minute or so, and start to join after that. This halted alike scenario is more likely for a network with a small number of nodes attempting to join than a large number of nodes attempting to join, as the probability that no nodes have a waiting time close to zero is higher. A maximum value ensures that no individual node waits for an unnecessary amount of time before attempting to join. A smaller maximum waiting time ensures that the halted time is never too long. The maximum waiting time should reflect the number of nodes on the network, with a small maximum waiting time being appropriate for small-scale network, such as in a home-automation network, and a large waiting time being appropriate for a network with hundreds or thousands of nodes, such as in industrial application.

Controlling the node to join the wireless network may for example comprise analysing the received beacon messages with respect to a congestion condition, and determining whether to control the node to join the wireless network based on the result of the analysis.

The beacon messages from the wireless network may be analysed in order to determine whether the wireless network is likely to be congested. This analysis may comprise frequency analysis, or a volume measurement, and is compared to a congestion condition.

Determining whether to control the node to join the wireless network may, for example, comprise:
controlling the node to transmit a beacon request message if the analysis determines that an indictor based on the received beacon messages does not satisfy the congestion condition;
controlling the node to join the wireless network if the analysis determines that an indictor based on the received beacon messages does not satisfy the congestion condition; and
controlling the node to repeat the step of waiting for the predetermined length of time if the analysis determines that an indictor based on the received beacon messages satisfies the congestion condition.

If the congestion condition is not satisfied, this may indicate that the network is unlikely to be congested if the node attempts to join it. In this case, a beacon request message may be sent in order to inform other joining nodes, via the nodes on the wireless network, that a node is about to join the network. This approach may make it less likely that a lot of nodes which are monitoring the channel will attempt to join the network at nearly the same time. Subsequently, the node may join the network.

Conversely, if the condition is satisfied, then may indicate that the network is likely to be congested if the node attempts to join it. In this case, the node may be controlled to not join the network, and instead wait for another predetermined length of time while receiving beacon messages from nodes on the wireless network before re-analysing the beacon messages to again determine whether to join the network.

The condition may, for example, be based on a threshold value indicating that the wireless network is not congested.

The condition may be set such that, for instance, when comparing to an indictor based on the received beacon messages, it delivers a meaningful result which indicates whether the wireless network is likely to be congested.

The method of joining a node to a wireless network for example, may further comprise:
obtaining the indicator based on the received beacon messages, wherein obtaining comprises one of:
dividing a total number of received beacon messages during the predetermined length of time by a total number of nodes of the wireless network; or
determining a maximum number of received beacon messages from any one node of the wireless network during the predetermined length of time.

The indicator may be obtained from the received beacon messages such that it provides a meaningful indicator regarding whether the wireless network is congested or not A high average number of received beacon messages per node of the wireless network may indicate that the network is congested. However, in the case that the node is only in range of a small number of the nodes of the wireless network, then a maximum number received from any one node of the wireless network may be a better indication of congestion. The total number of nodes of the wires network may be determined by the received beacon messages. Each received beacon message may contain the network ID and the address of the sending node. The joining node may record a list of nodes from that network ID which have ever sent beacons, and so a total number of nodes may be determined.

Controlling the node to repeat the step of waiting for the predetermined length of time for example, may further comprise determining a new maximum waiting time based on a previous maximum waiting time, and determining the predetermined length of time based on a random time value between 0 and the new maximum waiting time value.

By setting a new maximum waiting time, the system may dynamically react to the determination that the wireless network is busy. The initial maximum waiting time may be set to be appropriate for a small scale network, and upon determining that the network is congested, the maximum waiting time may be adapted to be appropriate for a medium or large scale network.

Setting the new maximum waiting time to be lower than the previous maximum waiting time may be advantageous in a case when the network is not very busy, as it reduces the average predetermined waiting time, and therefore increases the likelihood that the node will determine to join the network.

Setting the new maximum waiting time to be greater than the previous maximum waiting time may be advantageous in the case when the network is congested, as it reduces the average predetermined waiting time, and therefore increases the likelihood that the node will determine to join the network.

Determining a new maximum waiting time may, for example, comprise one or more of multiplying a previous maximum waiting time by a predetermined constant, and multiplying a previous maximum waiting time by an indicator based on the received beacon messages.

Multiplying the previous maximum waiting time by a predetermined constant may be advantageous in dynamically adjusting the new maximum waiting to reflect how busy the wireless network is in a simple manner, as it may have been determined that the network is congested if the method has reached this step.

Multiplying the previous maximum waiting time by an indicator based on received beacon messages may more accurately adjust the new maximum waiting time to reflect how busy the wireless network is. If the indicator is close to the boundary to satisfy the congestion condition, then this may indicate that the wireless network is close to being quiet enough to join, and therefore the new maximum waiting time may not be altered to be much larger than the previous maximum waiting time. Whereas, if the indicator greatly exceeds the satisfaction of the congestion condition then this may indicate that the wireless network is very busy, and therefore the new maximum waiting time may be altered to be much larger than the previous maximum waiting time. In this way, the joining time of the nodes trying to join may be further differentiated, reducing the chance of congestion.

Controlling the node to join the wireless network may, for example, comprise controlling the node to transmit an associate request message to the wireless network, controlling the node to wait for an associate response message communicated by a node on the wireless network, and controlling the node to join the wireless network responsive to receiving the associate response message.

When the node is controlled to join the network, this means that it may send an associate request message to nodes on the network in order to indicate it is ready to join, and then wait until receiving an associate response message from the wireless network in order to begin the actual joining procedure.

The method of joining a node to a wireless network may, for example, further comprise controlling the node to wait for a scanning time period responsive to the node transmitting the beacon request message.

This may enable to node wait until all the network routers have transmitted beacon messages, fulfilling the requirements of the IEEE 802.15.4 standard.

According to examples in accordance with another aspect of the invention, there is provided a computer program product comprising computer program code means which, when executed on a computing device having a processing system, cause the processing system to perform all of the steps of the method according to any of the preceding claims.

According to examples in accordance with another aspect of the invention, there is provided an apparatus for controlling a node for joining a wireless network, comprising a control unit configured to control the node to wait for a predetermined length of time, and a communication interface configured to receive beacon messages communicated by nodes of the wireless network for the predetermined length of time. Wherein the control unit is further configured to control the node to join the wireless network based on the received beacon messages.

The control unit may, for example, be further configured to determine the predetermined length of time based on a random time value between 0 and a maximum waiting time value, analyse the received beacon messages from the communication interface with respect to a congestion condition, and determine whether to control the node to join the wireless network based on the result of the analysis.

The control unit may, for example, be further configured to control the node to join the wireless network responsive to the analysis determining that an indictor based on the received beacon messages satisfies the congestion condition, and control the node to repeat the step of waiting for the predetermined length of time responsive to the analysis determining that an indictor based on the received beacon messages does not satisfy the congestion condition.

The communication interface may, for example, be further configured to, responsive to control unit determining to control the node to join the wireless network transmit a beacon request message, transmit an associate request message to the wireless network, and receive an associate response message. Wherein the control unit for example is further configured to control the node to wait for an associate response message communicated by a node on the wireless network responsive to transmitting an associate request message, and control the node to wait for a scanning time period responsive to the node transmitting the beacon request message.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a typical sequence of events for a node joining a wireless network.
Figure 2 shows the sequence of events of figure 1, with the addition of the node waiting while monitoring the channel of the wireless network before sending an associate request message.
Figure 3 shows a flowchart depicting a first method for controlling the node to wait while monitoring the wireless network as shown in Figure 2.
Figure 4 shows a flowchart depicting a second method for controlling the node to wait while monitoring the wireless network as shown in Figure 2, wherein the maximum waiting time is dynamic.
Figure 5 shows a wireless network apparatus, and multiple node apparatuses at different stages of the commissioning procedure.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention proposes a method for controlling a node for joining a wireless network, which may reduce the likelihood of congestion when many nodes are being controlled to join the wireless network at the same time. In particular, it is proposed to dynamically adjust a length of time the node is made to wait before attempting to join the network. Thus, a proposed embodiment utilizes beacon messages received by the node from nodes of the target wireless network as an indicator as to the likelihood of congestion, and adjusts the waiting time accordingly.

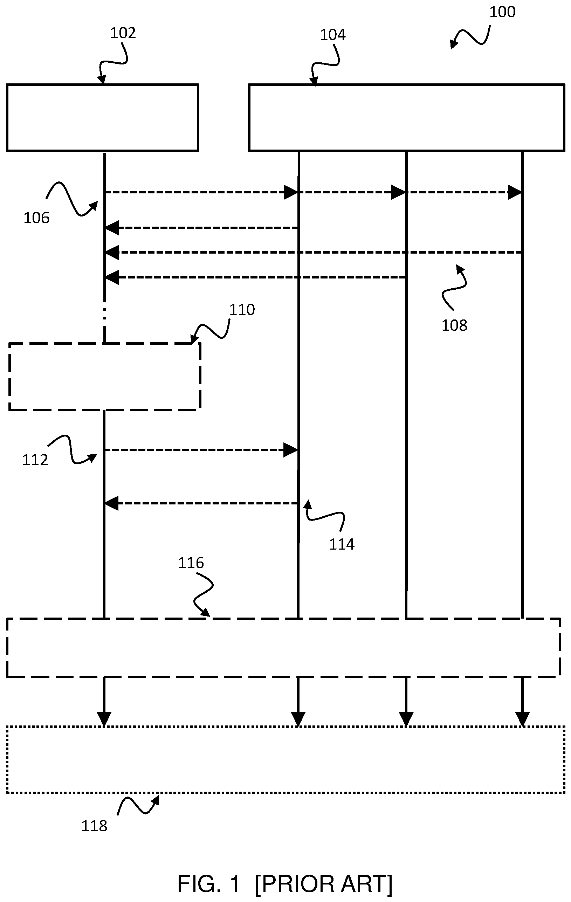

Figure 1 shows a typical known sequence of events 100 for a node 102 joining a wireless network.

Initially the node 102 scans all channels for a joinable wireless network 104. For each communicable channel, the node sends a beacon request message 106. The node 102 then waits for a pre-configured scanning time window while receiving beacon messages 108 from nodes of the wireless network 104 on the channel. This process is repeated for each communicable channel.

A network for the node 102 to join is then selected, based on the beacon messages 108 received from the nodes of each wireless network 104. All communication then occurs on the channel of the selected network.

Subsequently, the node 102 begins the actual network joining procedure by transmitting an associate request message 110 to a node 104 of the selected wireless network. When the node receives an associate response 114 from said node 104 of the selected wireless network, the node 102 and network node 104 proceed with standard authentication and key-exchange routines 116, resulting in the node 102 being connected to the selected wireless network 118.

In a case of multiple nodes attempting to join the selected wireless network at the same time, congestion occurs in the channel. Congestion causes communication failures of the joining nodes, ultimately slowing down the joining procedure for individual nodes and setup time of the wireless network as a whole. This results in a significant increase in time to complete the joining procedure during the setup of large-scale networks comprising, for example, hundreds of nodes in industrial lighting applications.

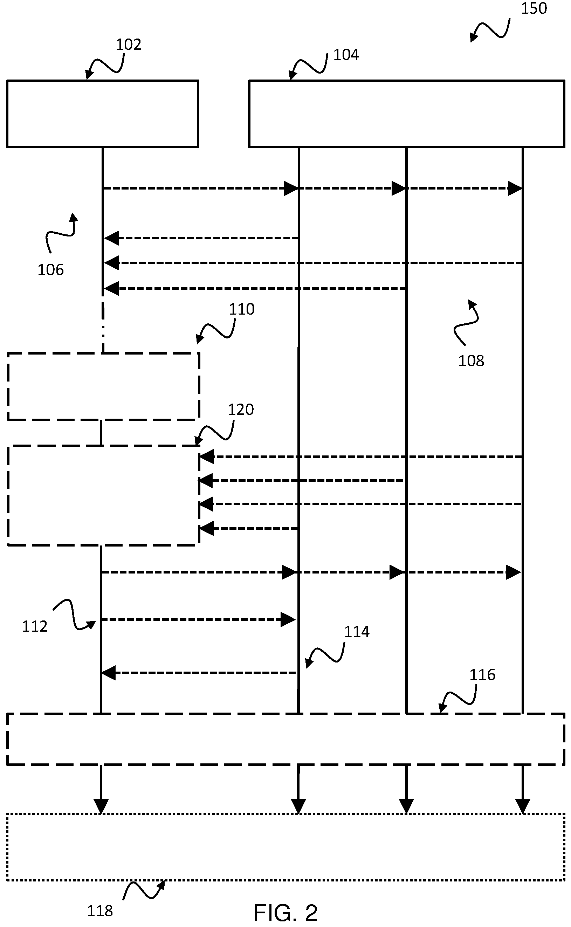

Figure 2 shows a sequence of events 150 for a node 102 joining a wireless network in accordance with the invention, based on the typical sequence of events 100 shown in Figure 1. In particular, the node 102 additionally waits for a length of time while monitoring the channel 120 after determining a wireless network to join and before sending an associate request message 112, while receiving beacon messages 108 from the wireless network. After waiting the node 102 sends a beacon request message 106 before starting the actual joining procedure.

Due to the fact that the node 102 is made to wait before starting the actual joining procedure, the joining time of the node 102 can be differentiated from other nodes (not shown) attempting to join the network. By differentiating, the likelihood of congestion in the wireless networks channel is reduced, as it is less likely that multiple nodes will attempt to join the network at the same time.

For example, the waiting time for each individual node is configured to be unique. However, this may prove impractical for a large number of nodes. Alternatively, the length of time is a random length of time between 0 and a maximum waiting time.

However, one problem arising from this solution is how to select an appropriate maximum waiting time. To successfully form a large-scale network, the maximum waiting time must be relatively large in order ensure to adequate differentiation between the joining time of the nodes. For example, the maximum waiting time may be greater than ten seconds for networks with hundreds of nodes. To successfully form a small-scale network, the maximum waiting time must be relatively small. For example, less than ten seconds for networks with several nodes.

In a case in which nodes are configured to have a relatively small maximum waiting time, there may be a large number of collisions during the commissioning procedure of a large-scale network involving many nodes, as the joining time of multiple nodes are not sufficiently differentiated. Therefore, in this case the time taken for individual nodes to join the wireless network, and for the formation of the wireless network, is much larger than a case where the maximum waiting time is relatively large.

In a case in which nodes are configured to have a relatively large maximum waiting time during a small-scale network commissioning procedure comprising, for example, only several nodes, the users can experience a halted-alike scenario. This is where all of the nodes do nothing while waiting for a length of time before joining, when the likelihood of congestion is relatively low. Therefore, the time taken for individual nodes to join the wireless network, and for the formation of the wireless network, would be much larger than a case where the maximum waiting time is relatively small.

A large-scale network, for example, could be an industrial lighting system. A small-scale network, for example, could be a home-automation network.

For the above reasons, in a case where the node is connected to either small-scale or large-scale networks, it proves impractical and/or difficult to pre-configure the node to have a single, static maximum waiting time, which ensures adequate operation for both use cases. However, dynamic adjustment of the maximum waiting time also proves problematic. This is due to the fact that, before joining the network, the node cannot directly communicate with other nodes attempting to join the network, in order to determine the number of nodes attempting to join the network, nor the chance of congestion.

The invention overcomes the problem of lack of direct communication, by exploiting beacon messages 108 sent by nodes of the wireless network 104. Beacon messages 108 are receivable by all nodes 102 monitoring the channel of the wireless network. For example, beacon messages 108 are transmitted to update nodes of the wireless network 104 regarding configuration changes, and periodically in order to synchronise nodes of the wireless network 104. The most important case in which nodes of the wireless network 104 transmit beacon messages 108 for this invention, is in response to receiving beacon request messages 106 from other nodes. This means that if the node 102 being controlled to join the network transmits a beacon request message 106, then nodes of the wireless network 104 within the communicable range of the joining node will transmit beacon messages 108 in response to receiving said beacon request messages 106.

As shown in figure 1 and 2, during the process of scanning all channels, nodes 102 transmit a beacon request message 106 and receive beacon messages 108 from nodes of the wireless network 104 which receive said beacon request messages 106. Therefore, beacon messages 108 received by the node 102 from the nodes of the wireless network 104 indicate the number of nodes attempting to join the wireless network, and therefore an indication of the chance of congestion. This can be used as a basis to determine a waiting time 120 for the node 102.

However, after this process of scanning channels in the typical joining procedure shown in Figure 1, the node 102 joining the network does not send another beacon request message 106, meaning each node 102 only sends one beacon request message 106. Therefore, nodes 102 which have scanned all the channels but have not yet j oined the wireless network become undetectable to other nodes attempting to join the wireless network. **In** other words, the nodes become silent after scanning all of the channels. As a result, it is possible for the node 102 attempting to join the wireless network to that the wireless network is not busy, and can subsequently attempt to join the wireless network. As all nodes attempting to join the network make the same decision in this circumstance, this would result in a congested network.

Therefore, after the node 102 waits while monitoring the wireless network 120 for beacon messages, and prior to sending an associate request message 112 and starting the actual network joining procedure, the node 102 is controlled to send another beacon request message 106.

To paraphrase the above, nodes attempting to join the wireless network cannot communicate with each other, and therefore cannot directly obtain how many nodes are joining the wireless network at the same time. However, each node 102 attempting to join the wireless network transmits a beacon request message 106 before the start of the actual joining procedure, which results in one beacon message 108 from each node of the wireless network 104 in its communicable range. Therefore, if there are a number of nodes trying to join at the same time, one node of the wireless network 104 would send a number of beacon messages 108 in response to the number of beacon request messages 106 from the nodes in its communicable range. Therefore, the repeated beacon messages 108 from the same node of the wireless network 104 indicate that there are at least that number of other nodes attempting to join the wireless network. If the repeated beacon messages 108 is above a certain threshold, the node 102 will regard the current situation as a potentially congested network with too many joining nodes. The node 102 will then be controlled to wait for a longer time 120 in order to relieve load on the channel

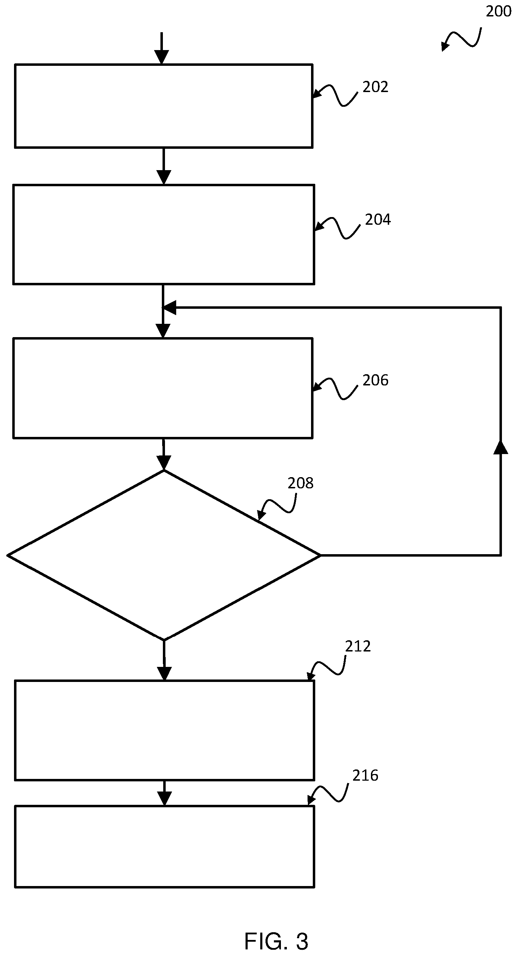

Figure 3 shows a flow chart 200 depicting a method for controlling the node to wait for a dynamically adaptive length of time, as shown during the sequence of events in Figure 2.

In step 202, a maximum waiting time is obtained. For example, this maximum waiting time is configured by a manufacturer to be appropriate for the commissioning of small-scale networks comprising several nodes.

In step 204, a predetermined length of time based on the maximum waiting time is determined. The predetermined length of time is determined to be a random length of time between 0 and the maximum waiting time.

In step 206, the node is made to wait for the predetermined length of time. During this time, the node receives beacon messages sent by nodes of the wireless network which are within the communicable range of the node. All beacon messages received by the node are recorded.

In step 208, it is determined whether the network is likely to be congested based on the beacon messages received during the predetermined period of time. If it is determined that the wireless network is likely to be congested, then step 206 is performed again in order to avoid a failed communication, and relieve the channel load. If it is determined that the wireless network is unlikely to be congested, then step 212 is performed.

It is determined that the network is likely to be congested if an indicator, based on the received beacon messages, satisfies a congestion condition.

In an embodiment, the indicator is the number of beacon messages received from all nodes of the wireless network during the waiting time, divided by the number of nodes of the wireless network. In other words, the average number of beacon messages sent per node of the wireless network. If this number exceeds a threshold value, then this is an indication that the wireless network is likely to be busy. This is due to the fact that a large number of beacon messages received by the node during the waiting time indicates that there are likely to be many nodes attempting to join the wireless network.

However, this average number of beacon messages received will be substantially lower for a node in the communicable range of only a small subset of the nodes of the wireless network, compared to a node in the communicable range of all of the nodes of the wireless network. To solve this problem, in another embodiment, the indicator is the maximum number of beacon messages received from an individual node of the wireless network during the waiting time. If this number exceeds a threshold value, then this is an indication that the wireless network is likely to be congested if the node attempts to join. The disadvantage of this embodiment, however, is that if one node of the wireless network were to transmit many beacon messages in response to circumstances other than receiving beacon request messages, then it is possible that the node attempting to join the network will falsely determine a high chance of congestion and continue to wait, slowing down the individual joining and overall commissioning procedure.

In step 212, responsive to the determination that the wireless network is unlikely to be congested, a beacon request message is transmitted. The purpose of this step is to indicate to other nodes attempting to join the wireless network that a node is starting the actual joining procedure. This increases the chance that the other nodes determine that the wireless network is likely to be congested at step 208, and therefore wait for more time before starting the actual joining procedure.

In step 216, the node begins the actual joining procedure. For example, the node transmits an associate request message to the wireless network and waits to receive an associate response message from the wireless network in response. Responsive to receiving the associate response message, the node then proceeds with standard authentication and key exchange routines to become connected to the wireless network.

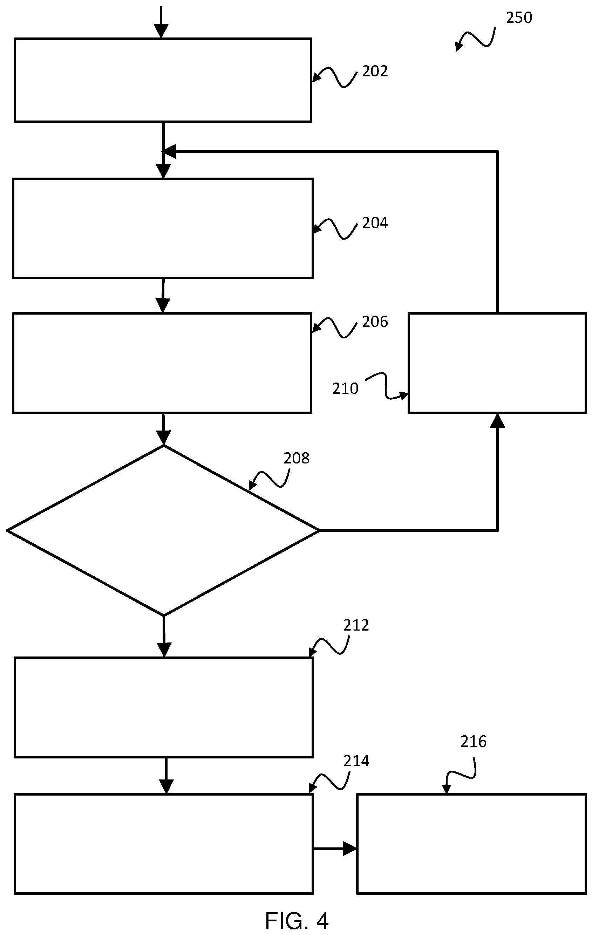

Figure 4 shows a flow chart 250 adapted from figure 2, such that the maximum waiting time is dynamic, and to further send a beacon request message prior to starting the actual joining procedure. The above descriptions of figure 3, are also applicable to figure 4, and are incorporated herein by reference. Thus, the above description may not be repeated here.

In figure 4, at step 208 if it is determined that the wireless network is likely to be congested then a new step 210 is performed. If it is determined that the wireless network is unlikely to be congested, then a new step 212 is performed.

In step 210, a new maximum waiting time is determined based on a previous maximum waiting time. This enables the maximum waiting time, upon which the predetermined waiting time is based, to be dynamically adapted.

In one embodiment, the new maximum waiting time is based on the previous maximum waiting time multiplied by a predetermined constant. For example, this constant is greater than 1, such that each time that the wireless network is determined to be likely to be congested, the maximum waiting time is increased so that it is a more appropriate value for sufficient differentiation of j oining time to a large-scale network.

In another embodiment, the new maximum waiting time is based on the previous maximum waiting time multiplied by an indicator based on the received beacon messages. In this way, the previous maximum waiting time is dynamically altered according to how busy the wireless network appears to be from the received beacon messages. For example, if the beacon messages indicate a large number of nodes attempting to join the network, then it is appropriate to increase the maximum waiting time accordingly. In contrast, if the beacon messages indicate only a small number of nodes attempting to join, then it is appropriate to decrease the maximum waiting time accordingly.

In step 212, in addition to increasing the chance that the other nodes determine that the wireless network is likely to be congested at step 208, this beacon request message also indirectly provides information useful for nodes attempting to join the wireless network in determining a new maximum waiting time in step 210.

In step 214, the node is made to wait for a scanning time period. This fulfills the requirements of the IEEE 802.15.4 standard. In other words, the nodes is made to wait enough time such that all of the nodes of the wireless network have transmitted beacon messages in response to the node sending the beacon request message before performing step 216.

It should be appreciated that an embodiment of the invention may not include step 210 and step 214. It should also be appreciated that an embodiment of the invention may include one, or both, of step 210 and step 214.

In step 216, the node begins the actual joining procedure. For example, the node transmits an associate request message to the wireless network and waits to receive an associate response message from the wireless network in response. Responsive to receiving the associate response message, the node then proceeds with standard authentication and key exchange routines to become connected to the wireless network.

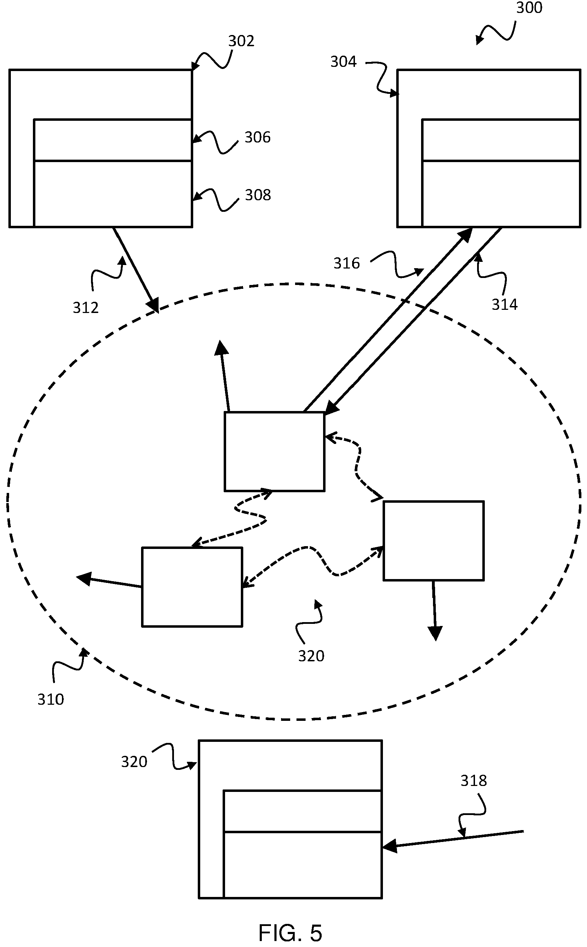

Figure 5 shows a wireless network in the process of being set up 300. This comprises three nodes being controlled at various stages of the j oining process. Namely a node 302 scanning networks to determine a wireless network to join, a node 304 during the actual joining procedure, and a node 320 waiting while monitoring the wireless network channel, each comprising a control unit 306 and a communication interface 308. **In** addition, three nodes 320 connected in a wireless network 310 are shown.

The control unit 306 of each node not yet connected to the network controls the operation of the node. This includes controlling the waiting node 320 to wait for a predetermined length of time, and to determine whether to control the waiting node 320 to join the wireless network 310 based on received beacon messages 318.

The control unit 306 determines the predetermined length of time based on a random time value between 0 and a maximum waiting time value, and analyse the beacon messages 318 with respect to a congestion condition in order to determine whether to control the waiting node 320 to join the wireless network 310. If the control unit determines that congestion is likely, then the control unit 306 controls the waiting node 320 to wait for another predetermined length of time. The control unit 306 controls the joining node 304 to wait for the communication interface 308 to receive an associate response message 316 responsive to sending an associate request message 314. The control unit 306 is also configured to control the scanning node 302 to wait for a scanning time period responsive to the node transmitting the beacon request message 312.

The communication interface 308 of the scanning node 302, and joining node 320, transmits a beacon request message 312 and an associate request message 316 responsive to the control unit 306 determining that the wireless network 310 is unlikely to be congested. The communication interface 308 is also able to receive beacon messages 318 while the waiting node 320 is being controlled to wait for the predetermined waiting time by the control unit 306. In addition, the communication interface 308 is able to receive the associate response message 316 while the control unit 306 controls the joining node 304 to wait responsive to transmitting the associate request message 314.

For example, the scanning node 302, joining node 304 and waiting node 320 are luminaires or sensors. The wireless network 310 is a Zigbee network utilized for a professional lighting system, or building- automation network. The nodes 320 of the wireless network 310 are routers or coordinators, or otherwise communicable nodes.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method, performed by a node (102), of controlling the node (102) for joining a wireless network, comprising:
controlling (206) the node (102) to wait for a predetermined length of time;
receiving beacon messages (108) communicated by nodes of the wireless network (104) during the predetermined length of time;
analysing (208) the number of received beacon messages with respect to a congestion condition, and
determining (208) whether to control the node to join the wireless network based on the result of the analysis.

2. The method of claim 1, further comprising determining (204) the predetermined length of time based on a random time value between 0 and a maximum waiting time value.

3. The method of claim 1, wherein determining whether to control the node (102) to join the wireless network (104) comprises:
controlling (212) the node to transmit a beacon request message (106) if the analysis determines that an indictor based on the number of received beacon messages (108) does not satisfy the congestion condition;
controlling (216) the node to join the wireless network if the analysis determines that an indictor based on the number of received beacon messages (108) does not satisfy the congestion condition; and
controlling (214) the node to repeat the step of waiting for the predetermined length of time if the analysis determines that an indictor based on the number of received beacon messages (108) satisfies the congestion condition.

4. The method of claim 3, wherein the congestion condition is based on a threshold value indicating that the wireless network (104) is congested.

5. The method of claim 3 or 4, further comprising:
obtaining the indicator based on the number of received beacon messages (108), wherein obtaining comprises one of:
dividing a total number of received beacon messages during the predetermined length of time by a total number of nodes of the wireless network; or
determining a maximum number of received beacon messages from any one node of the wireless network during the predetermined length of time.

6. The method of claim 3, wherein controlling the node to repeat the step of waiting for the predetermined length of time further comprises:
determining (210) a new maximum waiting time based on a previous maximum waiting time; and
determining (204) the predetermined length of time based on a random time value between 0 and the new maximum waiting time value.

7. The method of claim 6, wherein determining the new maximum waiting time comprises one or more of:
multiplying the previous maximum waiting time by a predetermined constant; and
multiplying the previous maximum waiting time by an indicator based on the received beacon messages.

8. The method of claim 1, wherein controlling the node (102) to join the wireless network (104) comprises:
controlling (112) the node (102) to transmit an associate request message to the wireless network;
controlling (114) the node (102) to wait for an associate response message communicated by a node on the wireless network (104); and
controlling (116,118) the node (102) to join the wireless network (104)responsive to receiving the associate response message.

9. The method of claim 8, further comprising controlling the node (102) to wait for a scanning time period responsive to the node transmitting the beacon request message.

10. A computer program product comprising computer program code means which, when executed on a computing device having a processing system within a node (102), cause the processing system to perform all of the steps of the method according to any of the preceding claims.

11. An apparatus within a node (102) for controlling the node for joining a wireless network, comprising:
a control unit (306) configured to control the node to wait for a predetermined length of time; and
a communication interface (308) configured to receive beacon messages communicated by nodes of the wireless network for the predetermined length of time, and
wherein the control unit (306) is further configured to control the node to join the wireless network based on a result of analysing of the number of received beacon messages with respect to a congestion condition.

12. The apparatus of claim 11, wherein the control unit (306) is further configured to:
determine the predetermined length of time based on a random time value between 0 and a maximum waiting time value;
analyse the received beacon messages from the communication interface with respect to a congestion condition; and
determine whether to control the node (102) to join the wireless network based on the result of the analysis.

13. The apparatus of claim 12, wherein the control unit (306) is further configured to:
control the node (102) to join the wireless network responsive to the analysis determining that an indictor based on the number of received beacon messages satisfies the congestion condition; and
control the node (102) to repeat the step of waiting for the predetermined length of time responsive to the analysis determining that an indictor based on the number of received beacon messages does not satisfy the congestion condition.

14. The apparatus of any of claims 11-13, wherein responsive to control unit (306) determining to control the node to join the wireless network, the communication interface (308) is further configured to:
transmit a beacon request message;
transmit an associate request message to the wireless network; and
receive an associate response message, and
wherein the control unit is further configured to:
control the node to wait for an associate response message communicated by a node on the wireless network responsive to transmitting an associate request message; and
control the node to wait for a scanning time period responsive to the node transmitting the beacon request message.

## Patentansprüche

1. Durch einen Knoten (102) durchgeführtes Verfahren zum Steuern, dass der Knoten (102) einem drahtlosen Netzwerk beitritt, umfassend:
Steuern (206), dass der Knoten (102) für eine vorbestimmte Zeitdauer wartet;
Empfangen von Beacon-Nachrichten (108), die durch Knoten des drahtlosen Netzwerks (104) während der vorbestimmten Zeitdauer übermittelt werden;
Analysieren (208) der Anzahl von empfangenen Beacon-Nachrichten im Hinblick auf eine Überlastungsbedingung und
Bestimmen (208), ob gesteuert werden soll, dass der Knoten dem drahtlosen Netzwerk beitritt, basierend auf dem Ergebnis der Analyse.

2. Verfahren nach Anspruch 1, ferner umfassend das Bestimmen (204) der vorbestimmten Zeitdauer basierend auf einem zufälligen Zeitwert zwischen 0 und einem maximalen Wartezeitwert.

3. Verfahren nach Anspruch 1, wobei das Bestimmen, ob gesteuert werden soll, dass der Knoten (102) dem drahtlosen Netzwerk (104) beitritt, umfasst:
Steuern (212), dass der Knoten eine Beacon-Anforderungsnachricht (106) sendet, falls die Analyse bestimmt, dass ein auf der Anzahl von empfangenen Beacon-Nachrichten (108) basierender Indikator die Überlastungsbedingung nicht erfüllt;
Steuern (216), dass der Knoten dem drahtlosen Netzwerk beitritt, falls die Analyse bestimmt, dass ein auf der Anzahl von empfangenen Beacon-Nachrichten (108) basierender Indikator die Überlastungsbedingung nicht erfüllt; und
Steuern (214), dass der Knoten den Schritt des Wartens für die vorbestimmte Zeitdauer wiederholt, falls die Analyse bestimmt, dass ein auf der Anzahl von empfangenen Beacon-Nachrichten (108) basierender Indikator die Überlastungsbedingung erfüllt.

4. Verfahren nach Anspruch 3, wobei die Überlastungsbedingung auf einem Schwellenwert basiert, der angibt, dass das drahtlose Netzwerk (104) überlastet ist.

5. Verfahren nach Anspruch 3 oder 4, ferner umfassend:
Erhalten des Indikators basierend auf der Anzahl von empfangenen Beacon-Nachrichten (108), wobei das Erhalten eines umfasst von:
einem Dividieren einer Gesamtanzahl von empfangenen Beacon-Nachrichten während der vorbestimmten Zeitdauer durch eine Gesamtanzahl von Knoten des drahtlosen Netzwerks; oder
einem Bestimmen einer maximalen Anzahl von empfangenen Beacon-Nachrichten von einem beliebigen Knoten des drahtlosen Netzwerks während der vorbestimmten Zeitdauer.

6. Verfahren nach Anspruch 3, wobei das Steuern, dass der Knoten den Schritt des Wartens für die vorbestimmte Zeitdauer wiederholt, ferner umfasst:
Bestimmen (210) einer neuen maximalen Wartezeit basierend auf einer vorherigen maximalen Wartezeit; und
Bestimmen (204) der vorbestimmten Zeitdauer basierend auf einem zufälligen Zeitwert zwischen 0 und dem neuen maximalen Wartezeitwert.

7. Verfahren nach Anspruch 6, wobei das Bestimmen der neuen maximalen Wartezeit eines oder mehrere umfasst von:
einem Multiplizieren der vorherigen maximalen Wartezeit mit einer vorbestimmten Konstanten;
und
einem Multiplizieren der vorherigen maximalen Wartezeit mit einem Indikator, basierend auf den empfangenen Beacon-Nachrichten.

8. Verfahren nach Anspruch 1, wobei das Steuern, dass der Knoten (102) dem drahtlosen Netzwerk (104) beitritt, umfasst:
Steuern (112), dass der Knoten (102) eine Zuordnungsanforderungsnachricht an das drahtlose Netzwerk sendet;
Steuern (114), dass der Knoten (102) auf eine Zuordnungsantwortnachricht wartet, die von einem Knoten an dem drahtlosen Netzwerk (104) übermittelt wird; und
Steuern (116, 118), dass der Knoten (102) dem drahtlosen Netzwerk (104) beitritt, als Reaktion auf das Empfangen der Zuordnungsantwortnachricht.

9. Verfahren nach Anspruch 8, ferner umfassend das Steuern, dass der Knoten (102) auf eine Scan-Zeitdauer wartet, als Reaktion darauf, dass der Knoten die Beacon-Anforderungsnachricht sendet.

10. Computerprogrammprodukt, umfassend Computerprogrammcodemittel, die, wenn sie auf einer Computervorrichtung, die ein Verarbeitungssystem innerhalb eines Knotens (102) aufweist, ausgeführt werden, das Verarbeitungssystem veranlassen, sämtliche der Schritte des Verfahrens nach einem der vorstehenden Ansprüche durchzuführen.

11. Einrichtung innerhalb eines Knotens (102) zum Steuern, dass der Knoten einem drahtlosen Netzwerk beitritt, umfassend:
eine Steuereinheit (306), die konfiguriert ist, um zu steuern, dass der Knoten für eine vorbestimmte Zeitdauer wartet; und
eine Kommunikationsschnittstelle (308), die konfiguriert ist, um Beacon-Nachrichten zu empfangen, die von Knoten des drahtlosen Netzwerks übermittelt werden, für die vorbestimmte Zeitdauer, und
wobei die Steuereinheit (306) ferner konfiguriert ist, um zu steuern, dass der Knoten dem drahtlosen Netzwerk beitritt, basierend auf einem Ergebnis des Analysierens der Anzahl von empfangenen Beacon-Nachrichten im Hinblick auf eine Überlastungsbedingung.

12. Einrichtung nach Anspruch 11, wobei die Steuereinheit (306) ferner konfiguriert ist zum:
Bestimmen der vorbestimmten Zeitdauer basierend auf einem zufälligen Zeitwert zwischen 0 und einem maximalen Wartezeitwert;
Analysieren der empfangenen Beacon-Nachrichten von der Kommunikationsschnittstelle im Hinblick auf eine Überlastungsbedingung; und
Bestimmen, ob gesteuert werden soll, dass der Knoten (102) dem drahtlosen Netzwerk beitritt, basierend auf dem Ergebnis der Analyse.

13. Einrichtung nach Anspruch 12, wobei die Steuereinheit (306) ferner konfiguriert ist zum:
Steuern, dass der Knoten (102) dem drahtlosen Netzwerk beitritt, als Reaktion auf die Analyse, die bestimmt, dass ein auf der Anzahl von empfangenen Beacon-Nachrichten basierender Indikator die Überlastungsbedingung erfüllt; und
Steuern, dass der Knoten (102) den Schritt des Wartens für die vorbestimmte Zeitdauer wiederholt, als Reaktion auf die Analyse, die bestimmt, dass ein auf der Anzahl von empfangenen Beacon-Nachrichten basierender Indikator die Überlastungsbedingung nicht erfüllt.

14. Einrichtung nach einem der Ansprüche 11 bis 13, wobei die Kommunikationsschnittstelle (308) als Reaktion darauf, dass die Steuereinheit (306) bestimmt, dass gesteuert wird, dass der Knoten dem drahtlosen Netzwerk beitritt, ferner konfiguriert ist zum:
Senden einer Beacon-Anforderungsnachricht;
Senden einer Zuordnungsanforderungsnachricht an das drahtlose Netzwerk; und
Empfangen einer Zuordnungsantwortnachricht und
wobei die Steuereinheit ferner konfiguriert ist zum:
Steuern, dass der Knoten auf eine Zuordnungsantwortnachricht wartet, die von einem Knoten an dem drahtlosen Netzwerk übermittelt wird, als Reaktion auf das Senden einer Zuordnungsanforderungsnachricht; und
Steuern, dass der Knoten für eine Scan-Zeitdauer wartet, als Reaktion darauf, dass der Knoten die Beacon-Anforderungsnachricht sendet.

## Revendications

1. Procédé, mis en œuvre par un nœud (102), consistant à commander le nœud (102) pour rejoindre un réseau sans fil, comprenant :
la commande (206) du nœud (102) pour attendre pendant une durée prédéterminée ;
la réception de messages de balise (108) communiqués par des nœuds du réseau sans fil (104) pendant la durée prédéterminée ;
l'analyse (208) du nombre de messages de balise reçus par rapport à une condition d'encombrement, et
le fait de déterminer (208) s'il faut commander le nœud pour rejoindre le réseau sans fil en fonction du résultat de l'analyse.

2. Procédé selon la revendication 1, comprenant en outre la détermination (204) de la durée prédéterminée en fonction d'une valeur de temps aléatoire entre 0 et une valeur de temps d'attente maximal.

3. Procédé selon la revendication 1, dans lequel le fait de déterminer s'il faut commander le nœud (102) pour rejoindre le réseau sans fil (104) comprend :
la commande (212) du nœud pour transmettre un message de demande de balise (106) si l'analyse détermine qu'un indicateur en fonction du nombre de messages de balise reçus (108) ne respecte pas la condition d'encombrement ;
la commande (216) du nœud pour rejoindre le réseau sans fil si l'analyse détermine qu'un indicateur en fonction du nombre de messages de balise reçus (108) ne respecte pas la condition d'encombrement ; et
la commande (214) du nœud pour répéter l'étape consistant à attendre pendant la durée prédéterminée si l'analyse détermine qu'un indicateur en fonction du nombre de messages de balise reçus (108) respecte la condition d'encombrement.

4. Procédé selon la revendication 3, dans lequel la condition d'encombrement est en fonction d'une valeur seuil indiquant que le réseau sans fil (104) est encombré.

5. Procédé selon la revendication 3 ou 4, comprenant en outre :
l'obtention de l'indicateur en fonction du nombre de messages de balise reçus (108), dans lequel l'obtention comprend l'une parmi :
la division d'un nombre total de messages de balise reçus pendant la durée prédéterminée par un nombre total de nœuds du réseau sans fil ; ou
la détermination d'un nombre maximal de messages de balise reçus en provenance d'un nœud quelconque du réseau sans fil pendant la durée prédéterminée.

6. Procédé selon la revendication 3, dans lequel la commande du nœud pour répéter l'étape consistant à attendre pendant la durée prédéterminée comprend en outre :
la détermination (210) d'un nouveau temps d'attente maximal en fonction d'un temps d'attente maximal précédent ; et
la détermination (204) de la durée prédéterminée en fonction d'une valeur de temps aléatoire entre 0 et la valeur de nouveau temps d'attente maximal.

7. Procédé selon la revendication 6, dans lequel la détermination du nouveau temps d'attente maximal comprend une ou plusieurs parmi :
la multiplication du temps d'attente maximal précédent par une constante prédéterminée ;
et
la multiplication du temps d'attente maximal précédent par un indicateur en fonction des messages de balise reçus.

8. Procédé selon la revendication 1, dans lequel la commande du nœud (102) pour rejoindre le réseau sans fil (104) comprend :
la commande (112) du nœud (102) pour transmettre un message de demande d'association au réseau sans fil ;
la commande (114) du nœud (102) pour attendre un message de réponse d'association communiqué par un nœud sur le réseau sans fil (104) ; et
la commande (116, 118) du nœud (102) pour rejoindre le réseau sans fil (104) en réponse à la réception du message de réponse d'association.

9. Procédé selon la revendication 8, comprenant en outre la commande du nœud (102) pour attendre pendant un laps de temps de balayage en réponse au nœud transmettant le message de demande de balise.

10. Produit programme informatique comprenant des moyens de code de programme informatique qui, lorsqu'ils sont exécutés sur un dispositif informatique ayant un système de traitement au sein d'un nœud (102), amènent le système de traitement à mettre en œuvre la totalité des étapes du procédé selon l'une quelconque des revendications précédentes.

11. Appareil au sein d'un nœud (102) permettant de commander le nœud pour rejoindre un réseau sans fil, comprenant :
une unité de commande (306) configurée pour commander le nœud pour attendre pendant une durée prédéterminée ; et
une interface de communication (308) configurée pour recevoir des messages de balise communiqués par des nœuds du réseau sans fil pendant la durée prédéterminée, et
dans lequel l'unité de commande (306) est configurée en outre pour commander le nœud pour rejoindre le réseau sans fil en fonction d'un résultat d'analyse du nombre de messages de balise reçus par rapport à une condition d'encombrement.

12. Appareil selon la revendication 11, dans lequel l'unité de commande (306) est configurée en outre pour :
déterminer la durée prédéterminée en fonction d'une valeur de temps aléatoire entre 0 et une valeur de temps d'attente maximal ;
analyser les messages de balise reçus en provenance de l'interface de communication par rapport à une condition d'encombrement ; et
déterminer s'il faut commander le nœud (102) pour rejoindre le réseau sans fil en fonction du résultat de l'analyse.

13. Appareil selon la revendication 12, dans lequel l'unité de commande (306) est configurée en outre pour :
commander le nœud (102) pour rejoindre le réseau sans fil en réponse à l'analyse déterminant qu'un indicateur en fonction du nombre de messages de balise reçus respecte la condition d'encombrement ; et
commander le nœud (102) pour répéter l'étape consistant à attendre pendant la durée prédéterminée en réponse à l'analyse déterminant qu'un indicateur en fonction du nombre de messages de balise reçus ne respecte pas la condition d'encombrement.

14. Appareil selon l'une quelconque des revendications 11 à 13, dans lequel en réponse à l'unité de commande (306) déterminant de commander le nœud pour rejoindre le réseau sans fil, l'interface de communication (308) est configurée en outre pour :
transmettre un message de demande de balise ;
transmettre un message de demande d'association au réseau sans fil ; et
recevoir un message de réponse d'association, et
dans lequel l'unité de commande est configurée en outre pour :
commander le nœud pour attendre un message de réponse d'association communiqué par un nœud sur le réseau sans fil en réponse à la transmission d'un message de demande d'association ; et
commander le nœud pour attendre pendant un laps de temps de balayage en réponse au nœud transmettant le message de demande de balise.
